# EUROPEAN PATENT APPLICATION

(11) **EP 1 887 353 A1**
(43) Date of publication of application: **13.02.2008**
(21) Application number: 06746430.5
(22) Date of filing: 16.05.2006
(51) Int. Cl.: G01N 30/32, F04B 43/02

(54) **DAMPER**

(30) Priority: 17.05.2005 JP 2005144095
(71) Applicant: Surpass Industry Co., Ltd., Gyoda-shi Saitama 361-0037 (JP)
(72) Inventor: HASUNUMA, Masahiro, Surpass Industry Co. Ltd., Gyoda-shi, Saitama 3610037 (JP)
(74) Representative: Dempster, Benjamin John Naftel
(86) International application number: PCT/JP2006/309716
(87) International publication number: WO 2006/123642

(57) **Abstract**

A damper that has chemical resistance, that can be used under a high-pressure environment, and that can remove pressure pulsations is provided. This damper includes a fluid chamber (23) into and out of which a fluid flows, a diaphragm (71) defining at least one surface of the fluid chamber (23), and a separate chamber (53) adjacent to the fluid chamber (23) in a fluid-tight manner, with the diaphragm (71) disposed therebetween. The diaphragm (71) includes a first film (73) having chemical resistance and a second film (75) having pressure resistance.

## Description

### TECHNICAL FIELD

The present invention relates to dampers.

### BACKGROUND ART

A reciprocating feed pump including a piston and a cylinder, for example, is occasionally used as a feed pump for use in liquid chromatography. This type of feed pump is known to cause pressure pulsations when the piston discharges liquid by reciprocating motion.

Such pressure pulsations are undesirable for the liquid chromatography to be supplied with the liquid. In general, a damper is disposed between the feed pump and the liquid chromatography to remove the pressure pulsations.

The damper is disposed not only to remove to the pressure pulsations caused downstream of the pump, but also to reduce water hammer, which results from other factors.

Various types of dampers have been proposed, including dampers with diaphragms (for example, see Patent Document 1).
Patent Document 1: Japanese Unexamined Patent Application, Publication No. 6-186216

### DISCLOSURE OF INVENTION

Patent Document 1 above discloses a damper including a separate chamber in which part of a feed channel is defined on one side of a diaphragm and in which oil is sealed on the other side thereof and a cylinder that communicates with the chamber wall. The cylinder accommodates a piston and a coil spring which can function to remove pressure pulsations.

The diaphragm is typically formed to not more than a predetermined thickness to ensure compliance with pressure pulsations and thus the ability to remove them.

If the diaphragm is thin, however, its strength is correspondingly low. A damper with such a diaphragm is disadvantageous in that it cannot be used under a high-pressure environment because the diaphragm may be torn.

A diaphragm damper for use under a high-pressure environment requires a thick diaphragm, which undesirably has low compliance with pressure pulsations and thus a low ability to remove them.

In particular, dampers for removing pressure pulsations from corrosive fluids or fluids requiring high purity require diaphragms formed of materials with chemical resistance. Such diaphragms, however, must be thick so that they can be used under a high-pressure environment because typical materials with chemical resistance have low strength.

Dampers other than diaphragm dampers have also been proposed, including dampers with bellows. Bellows dampers are disadvantageous in that they cannot be used under a high-pressure environment because the sides of the bellows (accordion-like portions) may be torn under high pressure.

An object of the present invention, which has been made to solve the above problems, is to provide a damper that has chemical resistance, that can be used under a high-pressure environment, and that can remove pressure pulsations.

To achieve the above object, the present invention provides the following solutions.

A damper of the present invention includes a fluid chamber into and out of which a fluid flows, a diaphragm defining at least one surface of the fluid chamber, and a separate chamber adjacent to the fluid chamber in a fluid-tight manner, with the diaphragm disposed therebetween. The diaphragm includes a first film having chemical resistance and a second film having pressure resistance.

According to the present invention, the damper can remove pressure pulsations from a high-pressure fluid because the diaphragm includes the first film, which has chemical resistance, and the second film, which has pressure resistance.

That is, the diaphragm can have chemical resistance because the first film having chemical resistance is used on the side of the diaphragm adjacent to the fluid. The use of the second film having pressure resistance for the diaphragm can improve the pressure resistance of the diaphragm and prevent a decrease in the thickness of the first film due to stretching.

If the diaphragm includes the first film and the second film, the diaphragm can be thinner than one composed of only a film having chemical resistance. Because the thickness of the diaphragm can be reduced, the ability of the damper to remove pressure pulsations can be improved.

In the present invention, the diaphragm preferably includes a plurality of the first films.

If the diaphragm includes a plurality of the first films, each first film can be thinner than in the case where the diaphragm includes a single first film. This improves the compliance of the diaphragm to pressure pulsations.

In addition, if the plurality of first films are used, they can prevent gas permeation more reliably than a single first film. Furthermore, even if one of the first films is torn, the other first film remain untorn and can maintain the chemical resistance of the diaphragm.

In the present invention, a length of the fluid chamber in a direction in which the diaphragm is deformed is preferably larger than a distance over which the diaphragm is deformed.

A predetermined volume can be left in the fluid chamber after the deformation of the diaphragm because the length of the fluid chamber in the direction in which the diaphragm is deformed is larger than the distance over which the diaphragm is deformed. The fluid chamber, having the predetermined volume remaining, can provide a higher ability to remove pressure pulsations from the fluid than in the case where the predetermined volume does not remain.

In the present invention, preferably, holes through which the fluid flows into and out of the fluid chamber are provided in a surface opposite the diaphragm in the fluid chamber, and a limiting portion is provided around a region where the holes are provided, in the opposite surface, to limit deformation of the diaphragm.

If the limiting portion is provided around the region where the holes through which the fluid flows into and out of the fluid chamber are formed, the limiting portion can limit the deformation of the diaphragm to prevent it from blocking the holes. It is therefore possible to prevent the diaphragm from blocking the flow of the fluid into and out of the fluid chamber, thus avoiding a decrease in the ability to remove pressure pulsations from the fluid.

In the present invention, the damper preferably further includes an inlet channel through which the fluid flows into the fluid chamber. The inlet channel preferably includes a bent portion.

If the inlet channel through which the fluid flows into the fluid chamber includes the bent portion, it can reduce the dynamic pressure of the fluid on the diaphragm, so that the thickness of the diaphragm can be reduced.

That is, the fluid flowing through the inlet channel collides with an inner wall of the inlet channel at the bent portion. This collision converts the dynamic pressure of the fluid to static pressure before it flows into the fluid chamber. The fluid flowing into the fluid chamber thus has a lower dynamic pressure than in the case where the fluid flows into the fluid chamber without passing through the bent portion.

In the present invention, the damper preferably further includes first and second casings joined with the diaphragm disposed therebetween so that the first casing defines the fluid chamber and the second casing defines the separate chamber. An alignment protrusion and an alignment recess for fixing the relative positions of the fluid chamber and the separate chamber and an edge protrusion and an edge recess for preventing leakage of the fluid from between joint surfaces of the first and second casings are preferably provided on the joint surfaces so as to surround the fluid chamber and the separate chamber.

If the alignment protrusion is fitted to the alignment recess, the relative positions of the fluid chamber and the separate chamber can be fixed, and the relative positions of the edge protrusion and the edge recess can be fixed. This provides a reliable fit between the edge protrusion and the edge recess to reliably prevent the fluid from flowing from between the joint surfaces.

In the above structure, preferably, the first casing is formed of a resin having chemical resistance, the second casing is formed of a metal, a peripheral protrusion is disposed in the periphery of the joint surface of the second casing so as to protrude toward the first casing, and a peripheral recess is disposed in a region opposite the peripheral protrusion on the first casing so as to fit to the protrusion.

If the peripheral protrusion disposed in the periphery of the joint surface of the second casing, which is formed of a metal, is fitted to the peripheral recess disposed on the first casing, which is formed of a resin, the peripheral protrusion of the second casing can prevent deformation of the first casing due to a high-pressure fluid.

In the present invention, the first film is preferably formed of a resin.

In the present invention, the second film is preferably formed of an elastic material.

If the first film used is formed of a resin, it can impart chemical resistance to the diaphragm.

If the second film used is formed of an elastic material, it can impart pressure resistance to the diaphragm without impairing the compliance to pressure pulsations.

According to the damper of the present invention, the use of the first film having chemical resistance on the side of the diaphragm adjacent to the fluid has the effect of imparting chemical resistance to the damper.

The use of the second film having pressure resistance for the diaphragm has the effect of improving the pressure resistance of the diaphragm so that the damper can be used under a high-pressure environment.

If the diaphragm includes the first film and the second film, the diaphragm can be thinner than one composed of only a film having chemical resistance. The diaphragm thus has an improved ability remove pressure pulsations.

### BRIEF DESCRIPTION OF DRAWINGS

Fig. 1 is a schematic diagram illustrating a damper according to an embodiment of the present invention.
Fig. 2 is a schematic diagram illustrating the structure of the damper of Fig. 1.
Fig. 3 is a partial enlarged view illustrating a fundamental part of the damper of Fig. 2.

### BEST MODE FOR CARRYING OUT THE INVENTION

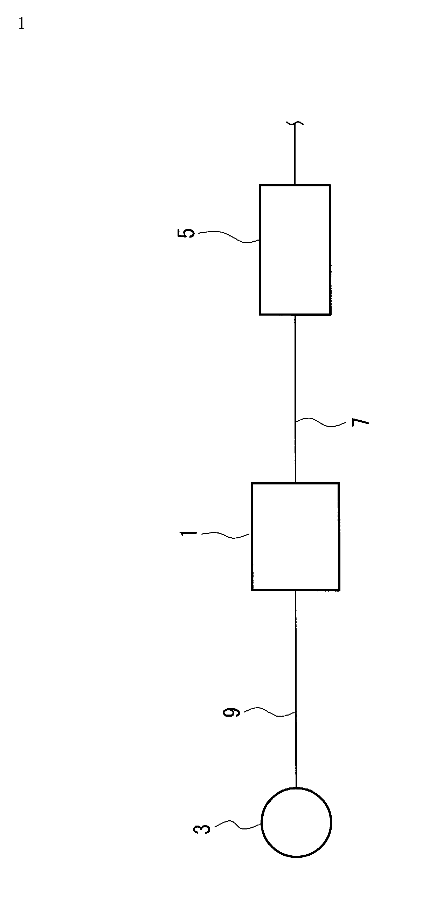

A damper according to an embodiment of the present invention will now be described with reference to Figs. 1 to 3.

Fig. 1 is a schematic diagram illustrating the damper according to the embodiment of the present invention.

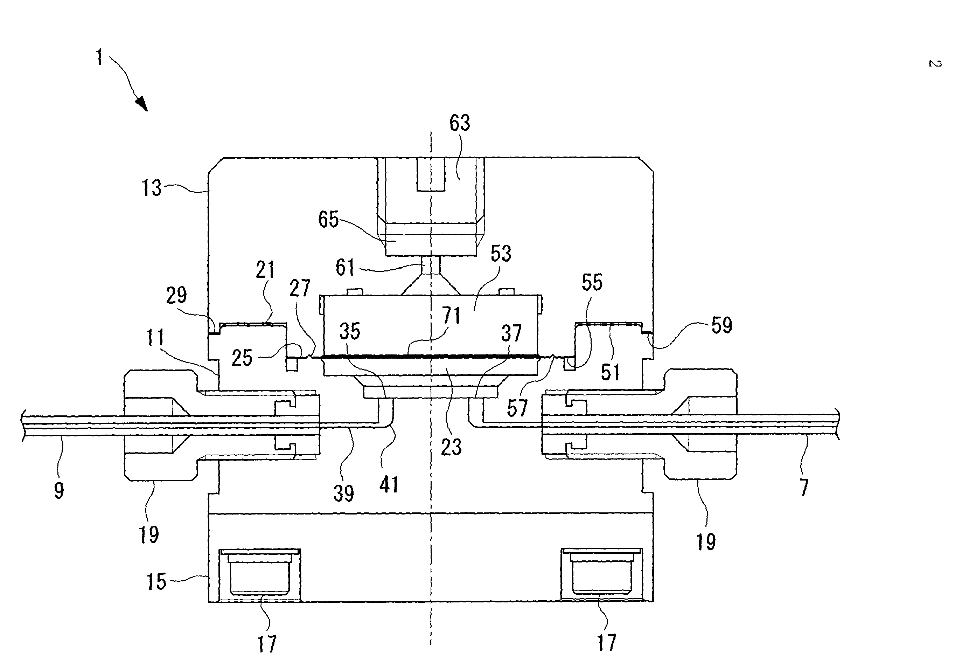

Referring to Fig. 1, a damper 1 is disposed between a pump 3 for pressurizing a fluid and a column 5. A tube 9 is connected to the damper 1 with a nut 19 (see Fig. 2) to introduce the fluid pressurized by the pump 3. A tube 7 is disposed between the damper 1 and the column 5. The tube 7 is connected to the damper 1 with a nut 19 (see Fig. 2) to introduce the fluid into the column 5 after the damper 1 removes pressure pulsations therefrom.

The fluid used is not particularly limited and may be either a liquid or a gas.

Fig. 2 is a schematic diagram illustrating the structure of the damper of Fig. 1.

In Fig. 2, the damper 1 mainly includes a resin body (first casing) 11 formed of a resin, a metal body (second casing) 13 formed of a metal, and a base 15.

The base 15, the resin body 11, and the metal body 13 of the damper 1 are stacked in the above order and are combined with bolts 17.

The resin used for the resin body 11 is not particularly limited and may be any resin having strength and chemical resistance; PEEK (registered trademark) resin is preferred in terms of, for example, strength and chemical resistance. The metal used for the metal body 13 is not particularly limited and may be, for example, stainless steel (e.g., SUS304).

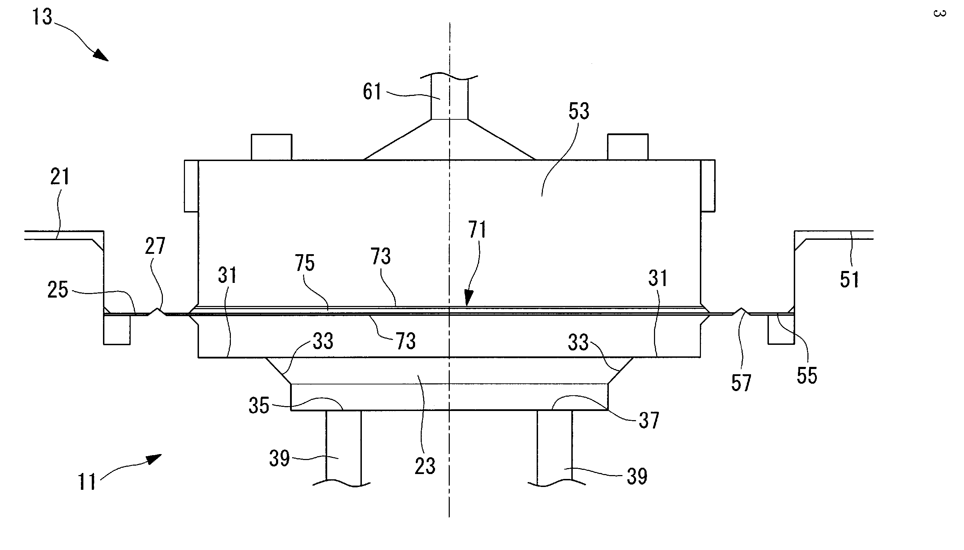

Fig. 3 is a partial enlarged view illustrating a fundamental part of the damper of Fig. 2.

In Figs. 2 and 3, the resin body 11 has the two joints 19 attached to its side surfaces (the left and right surfaces in Fig. 2) substantially horizontally (the left-to-right direction in Fig. 2). The connection tubes 7 and 9 are attached to the respective joints 19. The joints 19, as well as the resin body 11, are formed of PEEK resin. The joints 19 are attached by being screwed into the resin body 11. The connection tubes 7 and 9 are flow channels with an outside diameter of about 1.6 mm (1/16 inches) and an inside diameter of about 0.5 mm.

A fluid chamber 23 to be supplied with a fluid containing a corrosive chemical, an alignment recess 25 for fixing the relative positions of the resin body 11 and the metal body 13, an edge protrusion 27 for preventing leakage of the fluid, and a peripheral recess 29 for preventing deformation of the resin body 11 are formed from the center to the periphery of a resin joint surface 21 of the resin body 11 to which the metal body 13 is joined.

The fluid chamber 23 is defined by a cylindrical blind hole formed in the resin joint surface 21 and a diaphragm 71. A step (limiting portion) 33 is formed around the center of a surface 31 opposite the diaphragm 71 in the fluid chamber 23 such that the center is deeper by one level. An inlet (hole) 35 through which the fluid flows into the fluid chamber 23 and an outlet (hole) 37 through which the fluid flows out of the fluid chamber 23 are formed in the region of the opposite surface 31 which is deeper by one level.

Inner channels (inlet channel) 39 are formed inside the resin body 11 to communicate the fluid between the connection tube 7 and the outlet 37 and between the connection tube 9 and the inlet 35. The inner channels 39 each include a bent portion 41 connecting a portion extending in substantially the same direction as the connection tubes 7 and 9 and a portion extending to the fluid chamber 23.

The alignment recess 25 is formed adjacent to and around the fluid chamber 23. The edge protrusion 27, a protrusion having a substantially triangular cross section, is formed on a flat portion of the alignment recess 25 so as to surround the fluid chamber 23.

The peripheral recess 29 is formed in the periphery of the resin joint surface 21 so as to fit to a peripheral protrusion 59 described later.

An air chamber (separate chamber) 53, an alignment protrusion 55 for fixing the relative positions of the resin body 11 and the metal body 13, an edge recess 57 for preventing leakage of the fluid, and a peripheral protrusion 59 for preventing deformation of the resin body 11 are formed from the center to the periphery of a metal joint surface 51 of the metal body 13 to which the resin body 11 is joined.

The air chamber 53, in which air is sealed at a predetermined pressure, is defined by a cylindrical blind hole formed in the metal joint surface 51 and the diaphragm 71. A communicating hole 61 is formed in a surface opposite the diaphragm 71 in the air chamber 53 so that the air chamber 53 communicates with a communicating chamber 65 capped with a blank cap 63 through the communicating hole 61.

The air chamber 53 is configured so that the pressure of the air sealed therein can be controlled. The pressure of the air sealed in the air chamber 53 is determined based on the elastic force required for the diaphragm 17 to remove pressure pulsations from the fluid; the elastic force of the diaphragm 17 depends on the difference between the air pressure and the fluid pressure.

For example, if the fluid pressure is lower than or equal to the pressure in the sealed air chamber 53, pressure pulsations can be removed only by the communicating chamber 65 capped with the blank cap 63. If the fluid pressure is higher than the pressure in the sealed air chamber 53, on the other hand, a manual regulator or an electropneumatic regulator is connected to the communicating chamber 65. Such a regulator can provide a higher pressure in the sealed air chamber 53 than normal (the state where the communicating chamber 65 is capped with the blank cap 63), thus allowing removal of pressure pulsations from the high-pressure fluid. In addition, the pressure in the sealed air chamber 53 can be changed according to the fluid pressure.

If the fluid is supplied to the damper 1 at various different pressures, an electropneumatic regulator can be used to readily respond to changes in fluid pressure. In addition, a pressure sensor can be disposed downstream of the damper 1 to detect the pressure of the flowing fluid so that the electropneumatic regulator can be controlled based on the detected fluid pressure.

The alignment protrusion 55 is formed so as to fit to the alignment recess 25 described above. The edge recess 57 is formed on a flat portion of the alignment protrusion 55 so as to fit to the edge protrusion 27 described above. The edge recess 57 is formed as a recess having a substantially triangular cross section.

The peripheral protrusion 59 is formed in the periphery of the metal joint surface 51 so as to fit to the peripheral recess 29 described later.

The diaphragm 71 is formed as a film having a diameter of about 23 mm and including, from the fluid chamber 23 side to the air chamber 53 side, two resin films (first films) 73, one elastic film (second film) 75, and one resin film 73, which are laminated on top of each other. The diaphragm 71 is disposed so as to cover the region where the edge protrusion 27 and the edge recess 57 are formed.

The resin films 73 are formed of perfluoroalkoxylalkane (PFA) and have a thickness of about 0.05 mm. The elastic film 75 is formed of fluorocarbon rubber (FKM) and has a thickness of about 1 mm.

By disposing the resin film 73 on the air chamber 53 side, the elastic film 75 can be prevented from being torn when the diaphragm 71 is held between the edge protrusion 27 and the edge recess 57.

Next, the operation of the damper 1 having the structure described above will be described.

The high-pressure fluid pressurized by the pump 3 flows into one of the inner channels 39 through the connection tube 9 and the joint 19. The fluid flowing into the inner channel 39 through the joint 19 collides with the inner wall of the inner channel 39 at the bent portion 41, so that the dynamic pressure is converted to static pressure. The fluid then flows from the inner channel 39 into the fluid chamber 23 through the inlet 35.

The difference between the fluid pressure in the fluid chamber 23 and the air pressure in the air chamber 53 deforms the diaphragm 71 disposed therebetween toward the fluid chamber 23 side or the air chamber 53 side. The deformation of the diaphragm 71 changes the volume of the fluid chamber 23, thus relieving pressure pulsations of the fluid flowing into the fluid chamber 23.

A predetermined volume remains in the fluid chamber 23 after the deformation of the diaphragm 71 because the length of the fluid chamber 23 in a direction in which the diaphragm 71 is deformed (the length in the top-to-bottom direction of Fig. 3) is larger than the distance over which the diaphragm 71 is deformed.

When the diaphragm 71 is deformed, it comes into contact with the step 33, which limits the deformation of the diaphragm 71. This prevents the diaphragm 71 from being deformed such that it blocks the inlet 35 or the outlet 37.

The fluid whose pressure pulsations have been relieved by the deformation of the diaphragm 71, as described above, returns to the connection tube 7 through the outlet 37, the other inner channel 39, and the joint 19, and flows into the column 5.

The above structure can remove pressure pulsations from a high-pressure fluid because the diaphragm 71 includes the resin films 73, which have chemical resistance, and the elastic film 75, which has pressure resistance.

That is, the diaphragm 71 can have chemical resistance because the elastic film 75 is covered with the resin films 73 having chemical resistance. The use of the elastic film 75 having pressure resistance for the diaphragm 71 can improve the pressure resistance of the diaphragm 71 and suppress stretching of the resin films 73.

If the diaphragm 71 includes the resin films 73 and the elastic film 75, the diaphragm 71 can be thinner than one composed of only a film having chemical resistance. Because the thickness of the diaphragm 71 can be reduced, the ability of the damper 1 to remove pressure pulsations can be improved.

If the two resin films 73 are used on the side of the diaphragm 71 adjacent to the fluid, each resin film 73 can be thinner than in the case where the diaphragm 71 includes a single resin film 73. This improves the compliance of the diaphragm 71 to pressure pulsations and thus improves the ability of the damper 1 to remove pressure pulsations.

In addition, if the plurality of resin films 73 are used, they can prevent gas permeation more reliably than a single resin film 73. Furthermore, even if one of the resin films 73 is torn, the other resin film 73 remains untorn and can maintain the chemical resistance of the diaphragm 71 and prevent gas permeation.

A predetermined volume can be left in the fluid chamber 23 after the deformation of the diaphragm 71 because the length of the fluid chamber 23 in the direction in which the diaphragm 71 is deformed is larger than the distance over which the diaphragm 71 is deformed. The fluid chamber 23, having the predetermined volume remaining, can provide a higher ability to remove pressure pulsations from the fluid than in the case where the predetermined volume does not remain.

The step 33 is provided around the region where the inlet 35 and the outlet 37 are formed in the opposite surface 31. This step 33 can limit the deformation of the diaphragm 71 to prevent it from blocking the inlet 35 or the outlet 37. It is therefore possible to prevent the diaphragm 71 from blocking the flow of the fluid into and out of the fluid chamber 23, thus avoiding a decrease in the ability to remove pressure pulsations from the fluid.

The inner channel 39 through which the fluid flows into the fluid chamber 23 includes the bent portion 41. The bent portion 41 can reduce the dynamic pressure of the fluid on the diaphragm 71, so that the thickness of the diaphragm 71 can be reduced.

That is, the fluid flowing through the inner channel 39 collides with the inner wall of the inner channel 39 at the bent portion 41. This collision converts the dynamic pressure of the fluid to static pressure before it flows into the fluid chamber 23. The fluid flowing into the fluid chamber 23 thus has a lower dynamic pressure than in the case where the fluid flows into the fluid chamber 23 without passing through the bent portion 41. This reduces the strength required for the diaphragm 71.

The edge protrusion 27 can be reliably fitted to the edge recess 57 because the relative positions thereof can be fixed by fitting the alignment protrusion 55 to the alignment recess 25. This provides a reliable seal between the edge protrusion 27 and the edge recess 57 to reliably prevent the fluid from flowing from between the joint surfaces 21 and 51.

The peripheral protrusion 59 disposed in the periphery of the metal joint surface 51 is fitted to the peripheral recess 29 disposed on the resin body 11. The peripheral protrusion 59 can prevent expansion of the resin body 11. That is, the peripheral protrusion 59 can prevent the resin body 11 from being pushed and expanded outward by the high-pressure fluid charged in the fluid chamber 23, so that the damper 1 can withstand high pressure.

The technical scope of the present invention is not limited to the above embodiment; various modifications are permitted without departing from the spirit of the present invention.

For example, although the invention is applied to dampers for liquid chromatography in the embodiment described above, the invention is not limited to dampers for liquid chromatography but can also be applied to various other devices in which pressure pulsations occur in a high-pressure fluid.

The resin body 11 is held between the metal body 13 and the base 15 and is fastened with the bolts 17, which provide a higher fastening force. This allows the damper 1 to withstand high pressure, thus improving quality stability.

The resistance of the damper 1 to high pressure can thus be improved by providing the elastic film 75, forming the bent portions 41 in the inner channels 39, enhancing the seal between the edge protrusion 27 and the edge recess 57 through the fitting of the alignment protrusion 55 to the alignment recess 25, and fitting the peripheral protrusion 59 to the peripheral recess 29. The damper 1 can remove pressure pulsations from a high-pressure fluid at, for example, 5 to 8 MPa.

The technical scope of the present invention is not limited to the above embodiment; various modifications are permitted without departing from the spirit of the present invention.

For example, although the invention is applied to a damper in which air is sealed in the air chamber 53 at a predetermined pressure in the embodiment described above, the invention is not limited to a damper in which air is sealed in the air chamber 53, but can also be applied to various other dampers, including a damper in which gel is sealed in the air chamber 53 and a damper including an elastic member such as a spring.

## Claims

1. A damper comprising:
a fluid chamber into and out of which a fluid flows;
a diaphragm defining at least one surface of the fluid chamber; and
a separate chamber adjacent to the fluid chamber in a fluid-tight manner, with the diaphragm disposed therebetween;
wherein the diaphragm includes a first film having chemical resistance and a second film having pressure resistance.

2. The damper according to Claim 1, wherein the diaphragm includes a plurality of the first films.

3. The damper according to Claim 1 or 2, wherein a length of the fluid chamber in a direction in which the diaphragm is deformed is larger than a distance over which the diaphragm is deformed.

4. The damper according to one of Claims 1 to 3, wherein
holes through which the fluid flows into and out of the fluid chamber are provided in a surface opposite the diaphragm in the fluid chamber; and
a limiting portion is provided around a region where the holes are provided, in the opposite surface, to limit deformation of the diaphragm.

5. The damper according to one of Claims 1 to 4, further comprising an inlet channel through which the fluid flows into the fluid chamber, the inlet channel including a bent portion.

6. The damper according to one of Claims 1 to 5, further comprising first and second casings joined with the diaphragm disposed therebetween so that the first casing defines the fluid chamber and the second casing defines the separate chamber;
wherein an alignment protrusion and an alignment recess for fixing the relative positions of the fluid chamber and the separate chamber and an edge protrusion and an edge recess for preventing leakage of the fluid from between joint surfaces of the first and second casings are provided on the joint surfaces so as to surround the fluid chamber and the separate chamber.

7. The damper according to Claim 6, wherein
the first casing is formed of a resin having chemical resistance and the second casing is formed of a metal; and
a peripheral protrusion is disposed in the periphery of the joint surface of the second casing so as to protrude toward the first casing, and a peripheral recess is disposed in a region opposite the peripheral protrusion on the first casing so as to fit to the protrusion.

8. The damper according to one of Claims 1 to 7, wherein the first film is formed of a resin.

9. The damper according to one of Claims 1 to 8, wherein the second film is formed of an elastic material.
